# EUROPÄISCHE PATENTSCHRIFT

(11) **EP 3 187 703 B1**
(45) Veröffentlichungstag und Bekanntmachung des Hinweises auf die Patenterteilung: **23.05.2018**
(21) Anmeldenummer: 16002472.5
(22) Anmeldetag: 21.11.2016
(51) Int. Cl.: F01L 1/18, F01L 1/24, F01L 13/06, F02D 9/06, F02D 13/04, F02D 13/06, F02D 17/02

(54) **BRENNKRAFTMASCHINE MIT EINER MOTORSTAUBREMSE UND EINER DEKOMPRESSIONSBREMSE**
COMBUSTION ENGINE WITH AN ENGINE BRAKE WITH EXHAUST THROTTLE AND A DECOMPRESSION BRAKE
MOTEUR À COMBUSTION INTERNE COMPRENANT UN FREIN MOTEUR SUR ÉCHAPPEMENT ET FREIN DE TYPE À DÉCOMPRESSION

(30) Priorität: 22.12.2015 DE 102015016723
(43) Veröffentlichungstag der Anmeldung: 05.07.2017
(73) Patentinhaber: MAN Truck & Bus AG, 80995 München (DE)
(72) Erfinder: Ebert, Christoph, 90459 Nürnberg (DE); Herrmann, Tobias, 90475 Nürnberg (DE); Fink, Adrian, 90451 Nürnberg (DE)
(74) Vertreter: v. Bezold & Partner Patentanwälte - PartG mbB

(56) Entgegenhaltungen:
- EP-A2- 0 736 672
- WO-A1-2004/081352
- DE-C1- 3 923 371

## Beschreibung

Die Erfindung betrifft eine Brennkraftmaschine mit zumindest einem über eine Nockenwelle und eine Übertragungseinrichtung betätigbaren Auslassventil pro Zylinder, wobei zwischen der Nockenwelle und dem Auslassventil ein hydraulisches Ventilspielausgleichselement in der Übertragungseinrichtung angeordnet ist, sowie mit einer Motorbremseinrichtung, aufweisend eine Motorstaubremse zum Aufbau eines Abgasgegendrucks und eine Dekompressionsbremse, mit welcher zumindest in einer Motorbremsphase zumindest ein Auslassventil offen gehalten werden kann.

Aus den Offenlegungsschriften EP 2 143 894 A1 und EP 2 143 896 A1 sind Brennkraftmaschinen mit Motorbremseinrichtungen und Ventilspielausgleichsmechanismen bekannt. Dabei ist jeweils ein hydraulischer Ventilspielausgleichsmechanismus in einer Ventilbrücke angeordnet. Der Ventilspielausgleichsmechanismus weist dabei einen an einen Druckraum grenzenden Kolben auf, wobei der Druckraum über ein Rückschlagventil mit einer einen konstanten Druck aufweisenden Druckleitung strömungsverbunden ist. Vom Druckraum geht eine Entlastungsleitung aus, welche über ein steuerbares Entlastungsventil in einer Ölaustrittsöffnung mündet. In der Ventilbrücke ist ferner eine hydraulische Ventilzusatzsteuereinheit der Motorsteuereinrichtung angeordnet, deren Steuerdruckraum mit dem Druckraum des steuerbaren Entlastungsventils strömungsverbunden ist. Der Steuerdruckraum steht über einen Ölkanal mit einer Steuerdruckleitung in einem Gegenhalter in Strömungsverbindung, wobei ein Gegenhalter über einen Anschlagkolben die Ventilbrücke an einer den Auslassventilen abgewandten Seite kontaktiert. Durch die zahlreichen in der Ventilbrücke angeordneten hydraulischen Kolben und Druckleitungen ist ein hoher Bearbeitungs- und Fertigungsaufwand der Ventilbrücke erforderlich, wobei die Ventilbrücke strukturell geschwächt wird und somit entsprechend massiv ausgelegt werden muss.

Bei den in den genannten Druckschriften beschriebenen Motorbremseinrichtungen handelt es sich jeweils um eine Mischform aus einer Motorstaubremse und einer Dekompressionsbremse, die insbesondere auch als EVB (engl. Abkürzung für "exhaust valve brake") bezeichnet wird. Die hydraulische Ventilzusatzsteuereinheit ist dabei einseitig in eine zwei Auslassventile zugleich betätigende Ventilbrücke des Verbindungsmechanismus eingebaut. Die Speisung der hydraulischen Ventilzusatzsteuereinheit mit Öl erfolgt mittels des ohnehin vorhandenen Ölkreises der jeweiligen Brennkraftmaschine. Bei dieser Art von Motorbremseinrichtungen erfordert die Verwendung von hydraulischen Ventilspielausgleichseinrichtungen zusätzliche Maßnahmen, um ein unkontrolliertes Aufpumpen der Ventilspielausgleichseinrichtung während des Motorbremsbetriebes zu vermeiden, was zu schweren Motorschäden führen könnte. Bei der EP 2 143 894 A1 und der EP 2 143 896 A1 erfolgt dies dadurch, dass der Druckraum der hydraulischen Ventilspielausgleichseinrichtung über ein steuerbares Entlastungsventil während des Motorbremsbetriebes druckentlastet wird. Die aus dem Stand der Technik bekannte Anordnung mit zahlreichen Ölbohrungen und Hydraulikkolben in der Ventilbrücke hat den Nachteil, dass die Ventilbrücke strukturell geschwächt wird und diese somit größer dimensioniert werden muss.

In der Offenlegungsschrift DE 10 2012 100 962 A1 ist eine Möglichkeit beschrieben, einen hydraulischen Ventilspielausausgleich mit einem Entlastungsventil zu kombinieren und somit gleichzeitig eine Motorbremseinrichtung und einen wartungsfreien Ventiltrieb nur mit einem hydraulischen Ventilspielausgleich zu verwirklichen. Die Dekompressionsbremse wird somit durch das hydraulische Ventilspielausgleichselement gebildet. Um ein unerwünschtes Offenhalten des Auslassventils durch den hydraulischen Ventilspielausgleich nach Beendigung des Motorbremsbetriebs zu vermeiden, werden neben den üblichen Komponenten eines hydraulischen Ventilspielausgleichs jedoch noch folgende Komponenten für einen Bremsbetrieb benötigt: eine Entlastungsleitung mit steuerbarem Entlastungsventil inklusive Steuerleitung sowie einen Niederhalter mit Einstellschraube.

Die Funktion dieser Ausführung ist ähnlich der in den Offenlegungsschriften EP 2 143 894 A1 und der EP 2 143 896 A1 beschriebenen EVB-Motorbremseinrichtung und lässt sich wie folgt beschreiben: Wird die Abgasdrosselklappe geschlossen, steigt der Abgasdruck im Auslasskanal vor der Verdichtung (unterer Totpunkt) so stark an, dass das Auslassventil durch die Druckwelle eines benachbarten Zylinders kurzzeitig aufgedrückt wird. Der ständig mit Motoröldruck beaufschlagte Kolben des hydraulischen Ventilspielausgleichs hindert das Ventil am erneuten Schließen. Es verbleibt ein geringer Hub, wodurch beim Kompressionstakt im Motor bereits ein Teil der verdichteten Luft aus dem Zylinder ausströmen kann. Nach Erreichen des oberen Totpunkts bleibt diese Öffnung erhalten. Der Druck auf den sich dann abwärts bewegenden Kolben wird wesentlich verringert, die Bremsleistung verbessert sich. Durch die Drosselung des Abgases kann sowohl die Aufwärts- als auch die Abwärtsbewegung des Motorkolbens zum Bremsen genutzt werden. Zeitgleich wird im Motorbremsbetrieb das Entlastungsventil geschalten, das eine Entlastungsbohrung zum Hochdruckraum des hydraulischen Ventilspielausgleichs freigibt. Diese Entlastungsbohrung wird aber zunächst noch durch den Niederhalter verschlossen. Bei Beginn des Ausstoßtaktes wird durch die Kipphebelbewegung die Entlastungsbohrung freigegeben, das Öl entweicht und entlastet den Kolben. Somit kann sich der "ausgefahrene" Kolben des hydraulischen Ventilspielausgleichs wieder zurückstellen und das Auslassventil wieder komplett schließen.

Auch bei dieser Lösung sind somit noch die vorgenannten Komponenten in Form der Entlastungsleitung mit steuerbarem Entlastungsventil inklusive Steuerleitung und Niederhalter mit Einstellschraube zusätzlich zu einem klassischen hydraulischen Ventilspielausgleich für einen Bremsbetrieb notwendig.

Aus der Offenlegungsschrift DE 39 23 371 C1 ist auch eine Brennkraftmaschine mit einer Motorbremseinrichtung und einem Ventilspielausgleichsmechanismus bekannt.

Es ist somit eine Aufgabe der Erfindung, auf verbesserte Weise sowohl eine Motorbremse als auch einen automatischen Ventilspielausgleich bereitzustellen. Der Erfindung liegt insbesondere die Aufgabe einer einfacheren, kostensparenderen und bauraumsparenden Bereitstellung einer Motorbremse als auch eines automatischen Ventilspielausgleichs zugrunde.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Vorrichtung, insbesondere eine Brennkraftmaschine, mit zumindest einem über eine Nockenwelle und einer mechanischen Übertragungseinrichtung betätigbaren Auslassventil pro Zylinder bereitgestellt. Hierbei ist zwischen der Nockenwelle und dem Auslassventil ein hydraulisches Ventilspielausgleichselement in der Übertragungseinrichtung angeordnet. Das hydraulische Ventilspielausgleichselement kann einen an einen Druckraum grenzenden Kolben und eine in den Druckraum über ein durch eine Feder belastetes Rückschlagventil mündende Öldruckleitung umfassen.

Hydraulische Ventilspielausgleichselemente (HVA) in Brennkraftmaschinen sind an sich bekannt und dienen dazu, insbesondere die sich über die Betriebsdauer ändernden Längenabmessungen der Ladungswechselventile so auszugleichen, dass in der Grundkreisphase des das Ventil betätigenden Nockens ein sicheres Ventilschließen gewährleistet ist. Dabei soll andererseits die Nockenerhebung verlustfrei auf das Ventil übertragen und somit in eine Ventilhubbewegung umgewandelt werden. Die Wirkungsweise derartiger hydraulischer Ventilspielausgleichselemente, die im Kraftfluss einer Ventilsteuerung, insbesondere einer Brennkraftmaschine, angeordnet sind, wird im Folgenden als bekannt vorausgesetzt.

Die Brennkraftmaschine umfasst ferner eine Drehzahlbegrenzungseinrichtung, die ausgeführt ist, eine Kraftstoffeinspritzung oberhalb einer vorbestimmten Abregeldrehzahl zu deaktivieren.

Die Brennkraftmaschine umfasst ferner eine Motorbremseinrichtung, aufweisend eine an sich bekannte Motorstaubremse zum Aufbau eines Abgasgegendrucks. Die Motorstaubremse kann beispielsweise eine im Auspufftrakt angeordnete steuerbare oder regelbare Stauklappe umfassen. Beim Schließen der Klappe erhöht sich der Staudruck auf der gegen die Strömungsrichtung liegenden Seite und schafft so in Wirkung auf den Antriebsmotor des Kraftfahrzeugs eine Bremswirkung.

Die Motorbremseinrichtung umfasst ferner eine Dekompressionsbremse, mit welcher zumindest in einer Motorbremsphase zumindest ein Auslassventil offen gehalten werden kann. Die Dekompressionsbremse wird gasgesteuert über den erhöhten Abgasgegendruck bei zumindest teilweise geschlossener Bremsklappe initiiert, bei dem gezielt ein "Ventilspringen" der Auslassventile ausgelöst wird.

Eine Besonderheit liegt vorliegend darin, dass die Dekompressionsbremse hierbei durch das hydraulische Ventilspielausgleichselement gebildet ist. Mit anderen Worten sind die Motorstaubremse und das hydraulischen Ventilspielausgleichselement so ausgelegt, dass eine Summe der auf das Auslassventil wirkenden Kräfte im Motorbremsbetrieb zu einer Offenstellung des Auslassventils führt. Die auf das Auslassventil wirkenden Kräfte umfassen einerseits eine Ventilfederkraft des Auslassventils, eine brennraumseitig erzeugte Gasdruckkraft, die jeweils in Schließrichtung des Auslassventils wirken, eine in der Übertragungseinrichtung wirkende Reibungskraft und andererseits eine von der Motorstaubremse erzeugte Gasdruckkraft des Abgasdruckes, eine von dem Ventilspielausgleichselement erzeugte Öldruckkraft und eine Federkraft der Rückstellfeder des hydraulischen Ventilspielausgleichselements, die jeweils in eine der Schließrichtung entgegengesetzte Richtung wirken. Im Motorbremsbetrieb wirkt somit eine durch das hydraulische Ventilspielausgleichselement ausgeübte Kraft zusammen mit der durch die Motorstaubremse erzeugten Gaskraft des Abgasdruckes auf das Auslassventil und führt dazu, dass das Auslassventil in die Offenstellung gedrückt und/oder in der Offenstellung gehalten wird. Der hydraulische Ventilspielausgleich übernimmt somit eine Doppelfunktion. Zum einen wird mit ihm in herkömmlicher Weise ein wartungsfreier Ventiltrieb verwirklicht, zum anderen wird er im Motorbremsbetrieb zur Bremsleistungssteigerung verwendet, in der mittels des hydraulischen Ventiltriebs in einer Motorbremsphase zumindest ein Auslassventil offen gehalten werden kann, so dass der hydraulische Ventiltrieb auch die Funktion einer Dekompressionsbremse übernimmt. Dies spart Bauteile und Kosten.

Ein besonderer Vorzug der Erfindung liegt darin, dass der hydraulische Ventilspielausgleich als klassischer bzw. herkömmlicher hydraulischer Ventilspielausgleich ausgebildet sein kann, d. h. in Form eines hydraulischen Ventilspielausgleichs bereitgestellt werden kann, der keine zusätzlichen Mittel aufweist, um eine beschleunigte Druckentlastung des Druckraumes des hydraulischen Ventilspielausgleichs zu ermöglichen, um ein schnelleres Schließen des Auslassventils nach Beendigung des Motorbremsbetriebs zu ermöglichen.

Um sicherzustellen, dass die Auslassventile nach Beendigung des Motorbremsbetriebs vor dem befeuerten Betrieb wieder vollständig geschlossen sind, und um somit einen sicheren Übergang von einem Motorbremsbetrieb in den befeuerten Betrieb sicherzustellen, sind die Übertragungseinrichtung, die Motorstaubremse und das hydraulische Ventilspielausgleichselement so ausgelegt, dass eine Grenzdrehzahl, ab der es im Motorbremsbetrieb in der Nockengrundkreisphase zum Auftreten eines Spaltes zwischen dem Auslassventil und dem zugeordneten Ventilsitzring kommt, um einen Abstandswert oberhalb der Abregeldrehzahl liegt.

Insbesondere können die Übertragungseinrichtung, die Motorstaubremse und das hydraulische Ventilspielausgleichselement so ausgelegt sein, dass eine Summe der auf das Auslassventil in Schließrichtung wirkenden Kräfte in einer Nockengrundkreisphase nur bei einer Drehzahl der Brennkraftmaschine unterhalb der vorbestimmten Grenzdrehzahl größer als eine Summe der in einer Öffnungsrichtung wirkenden Kräfte ist, so dass das Auslassventil in der Nockengrundkreisphase bei einer Drehzahl der Brennkraftmaschine unterhalb der Grenzdrehzahl in der Schließstellung gehalten wird und bei einer Drehzahl der Brennkraftmaschine größer gleich der Grenzdrehzahl in die Offenstellung bewegt wird. Die Öffnungsrichtung ist diejenige Richtung, in der sich das Auslassventil von der Schließstellung in eine Offenstellung bewegt, bzw. diejenige Richtung, in der sich das Auslassventil von seinem zugeordneten Ventilsitzring wegbewegt, bzw. diejenige Richtung, in der sich das Auslassventil auf den Kolben des Zylinders bzw. den Zylinderboden zubewegt. Die Schließrichtung ist hierzu entgegengesetzt.

Mit anderen Worten werden die von den Komponenten der Brennkraftmaschine erzeugten Kräfte, die auf das Auslassventil wirken, so festgelegt, dass ein Ventilspringen bzw. Ventilflattern zur Erhöhung der Motorbremswirkung nur oberhalb der Abregeldrehzahl auftreten kann.

Dies stellt sicher, dass die Drehzahlbereiche, in denen jeweils ein befeuerter Betrieb und ein Ventilspringen auftreten können, voneinander getrennt sind. Somit kann nach Ende einer Motorbremsphase ein befeuerter Betrieb erst wieder einsetzen, wenn das von dem Ventilspielausgleichselement im Rahmen einer Dekompressionsbremsfunktion offengehaltene Auslassventil aus der Offenstellung wieder in die Schließstellung übergangen ist.

Unter einer "Nockengrundkreisphase" soll dabei insbesondere ein Winkelbereich der Nockeneinheit verstanden werden, in dem Nockenkonturen sämtlicher Teilnocken der Nockeneinheit ein gemeinsames Grundkreisniveau einnehmen. Weiter soll unter einer "Nockengrundkreisphase" insbesondere ein Winkelbereich der Nockeneinheit verstanden werden, in dem ein der Nockeneinheit zugeordnetes Gaswechselventil geschlossen ist - falls keine Dekompressionsbremse vorhanden ist. Die Dekompressionsbremse dient dazu, in der Nockengrundkreisphase gezielt ein Öffnen der Gaswechselventile, insbesondere der Auslassventile, zu erzeugen, um die verrichtete Kompressionsarbeit zum Bremsen nutzbar zu machen. Hierbei wird der Druck im Zylinder durch gezieltes Öffnen eines Gaswechselventils so abgebaut, dass im anschließenden Expansionstakt nur noch eine verringerte Arbeit an die Kurbelwelle abgegeben werden kann.

Die in Schließrichtung auf das Auslassventil wirkenden Kräfte der Brennkraftmaschine umfassen vorzugsweise eine Ventilfederkraft des Auslassventils und eine brennraumseitig erzeugte Gasdruckraft. Die in einer Öffnungsrichtung wirkenden Kräfte umfassen vorzugsweise eine von der Motorstaubremse erzeugte Gasdruckkraft des Abgasdruckes, eine von dem Ventilspielausgleichselement erzeugte Öldruckkraft und eine Federkraft der Rückstellfeder des hydraulischen Ventilspielausgleichselements.

Unter einer erfindungsgemäßen Auslegung der Brennkraftmaschine zur Anpassung der Grenzdrehzahl, ab der es zum Auftreten eines Spaltes zwischen Auslassventil 1 und Ventilsitzring kommt, wird eine derartige zweckmäßige Anpassung dieser Einflussgrößen bzw. Kräfte verstanden. Je nach Auslegung kann somit die Grenzdrehzahl, ab der ein Ventilspringen auftritt, hin zu größeren oder kleineren Werten verschoben werden.

Beispielsweise kann eine Verschiebung der Grenzdrehzahl hin zu größeren Werten durch zumindest eine der folgenden Maßnahmen erzielt werden: Abgasdruck verringern, z. B. durch Verringerung der Schließstellung der Stauklappe; Gasdruck von Brennraumseite erhöhen; Öldruck, der am hydraulischen Ventilspielausgleich anliegt, verringern; Federkraft der Rückstellfeder des hydraulischen Ventilspielausgleichs verringern; Ventilfederkraft erhöhen; oder die Reibung im Ventiltrieb erhöhen. Mit zumindest einer dieser Maßnahmen kann eine Verschiebung des Auftretens des Spaltes hin zu größeren Motordrehzahlen erzielt werden.

Auf diese Weise kann die Grenzdrehzahl, ab der im Motorbremsbetrieb in der Nockengrundkreisphase ein Ventilspringen des Auslassventils stattfindet, auf einen Wert eingestellt werden, der um einen gewünschten Abstandswert oberhalb der Abregeldrehzahl liegt.

Gemäß einer bevorzugten Ausführungsform ist keine von einem Druckraum des Ventilspielausgleichselements ausgehende, über ein steuerbares Entlastungsventil mit einer Drucksenke verbindbare Entlastungsleitung vorgesehen. Eine besonders vorteilhafte Variante dieser Ausführungsform sieht ferner vor, dass kein Gegenhalter vorgesehen ist, der ausgebildet ist, eine Austrittsöffnung der Entlastungsleitung erst zu Beginn eines Auslasstaktes freizugeben. Insbesondere ist kein Gegenhalter vorgesehen, an dem die Übertragungseinrichtung in einer Endstellung anliegt. Dadurch können Kosten für diese zusätzlichen Teile und der dafür benötigte Bauraum eingespart werden.

In einem bevorzugten Ausführungsbeispiel umfasst die mechanische Übertragungseinrichtung eine Ventilbrücke und einen als Kipphebel oder Schlepphebel ausgebildeten Ventilhebel, der durch die Nockenwelle angetrieben wird und über die Ventilbrücke auf die Auslassventile wirkt.

Gemäß einer bevorzugten Ausführungsform können ein Kolben, ein Rückschlagventil und eine Feder des hydraulischen Ventilspielausgleichselements zwischen dem Ventilhebel und der Ventilbrücke angeordnet sein. Je nach Ventiltriebsaufbau sind jedoch auch andere Einbauorte bzw. Bauformen für den hydraulischen Ventilspielausgleich möglich. Beispielsweise kann der hydraulische Ventilspielausgleich zwischen Stößelstange und Kipphebel angeordnet sein, integriert in einen Tassenstößel oder einen Ventilstößel.

Das hydraulische Ventilspielausgleichselement ist vorzugsweise so ausgeführt, dass eine Dauer der Schließzeit im Wesentlichen einer Dauer entspricht, die ein leckagebedingter Rückstellvorgang des ausgelenkten Kolbens des hydraulischen Ventilspielausgleichselements dauert, der am Ende des Motorbremsbetriebs durch eine Reduzierung einer auf das Auslassventil wirkenden Gaskraft des Abgasdruckes ausgelöst wird. Dies ist beispielsweise dann der Fall, wenn das hydraulische Ventilspielausgleichselement keine zusätzlichen Mittel aufweist, um eine beschleunigte Druckentlastung des Druckraumes des hydraulischen Ventilspielausgleichs zu ermöglichen. Bei einem derartigen Ventilspielausgleichselement sorgen, nach Wegfall der Gaskraft des Abgasdruckes, die Ventilfeder und der Gasdruck aus dem Brennraum dafür, dass das hydraulische Ventilspielausgleichselement wieder in die Ausgangslage zurückgedrückt wird. Beim "Zurückdrücken" wird Öl aus der Hochdruckkammer über den Leckspalt ausgepresst, was einer Ölvolumenreduzierung im Hochdruckraum des hydraulischen Ventilspielausgleichs entspricht.

_{[EC(1]}Unter der Schließzeit des Auslassventils wird die Zeitspanne zwischen dem Öffnen der Motorstaubremse, was dem Ende des Motorbremsbetriebs entspricht, und der Geschlossenstellung des durch das hydraulische Ventilspielausgleichselement im Motorbremsbetrieb offengehaltenen Auslassventils verstanden. Die Schließzeit kann beispielsweise experimentell auf einem Prüfstand gemessen werden.

Gemäß dieser Ausführungsform ist im Wesentlichen der Rückgang der durch die Motorstaubremse erzeugten Gaskraft und nicht eine Veränderung der von dem Ventilspielausgleichselement erzeugten Ölkraft maßgeblich für die Rückkehr des Auslassventils in die Schließstellung nach Beendigung des Motorbremsbetriebs und damit auch für den Wert der Schließzeit. Eine Dauer der Schließzeit kann somit im Wesentlichen von einer bei Öffnen der Motorstaubremse am Ende des Motorbremsbetriebs verursachten Reduzierung einer auf das Auslassventil wirkenden Gaskraft des Abgasdruckes abhängen.

Gemäß einem weiteren Aspekt betrifft die Erfindung ferner ein Kraftfahrzeug, insbesondere ein Nutzfahrzeug, mit einer Brennkraftmaschine, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Ventiltrieb mit hydraulischem Ventilspielausgleich gemäß einer Ausführungsform der Erfindung;
- Figur 2: eine Illustration der im Motorbremsbetrieb wirkenden Kräfte auf die Auslassventile des Ventiltriebs der Figur 1;
- Figur 3: eine Illustration des Übergangs von Motorbremsbetrieb zum befeuerten Betrieb gemäß einer Ausführungsform der Erfindung; und
- Figur 4: eine Illustration der Bereiche, in denen ein Ventilspringen auftreten kann.

Gleiche oder funktional äquivalente Elemente sind in allen Figuren mit denselben Bezugszeichen bezeichnet.

Es ist allgemein bekannt, eine Brennkraftmaschine durch den Einbau einer Drehzahlbegrenzungseinrichtung vor unzulässig hohen Drehzahlen zu schützen. Eine Drehzahlbegrenzung wird durch Abschaltung der Kraftstoffeinspritzung oberhalb einer vorgegebenen maximalen Drehzahl erreicht. Hierzu ist eine entsprechende Steuerfunktion in der jeweiligen Einspritzsteuerung vorhanden. Die Brennkraftmaschine umfasst daher vorliegend die Drehzahlbegrenzungseinrichtung 10, die ausgeführt ist, eine Kraftstoffeinspritzung oberhalb einer vorbestimmten Abregeldrehzahl n1 zu deaktivieren.

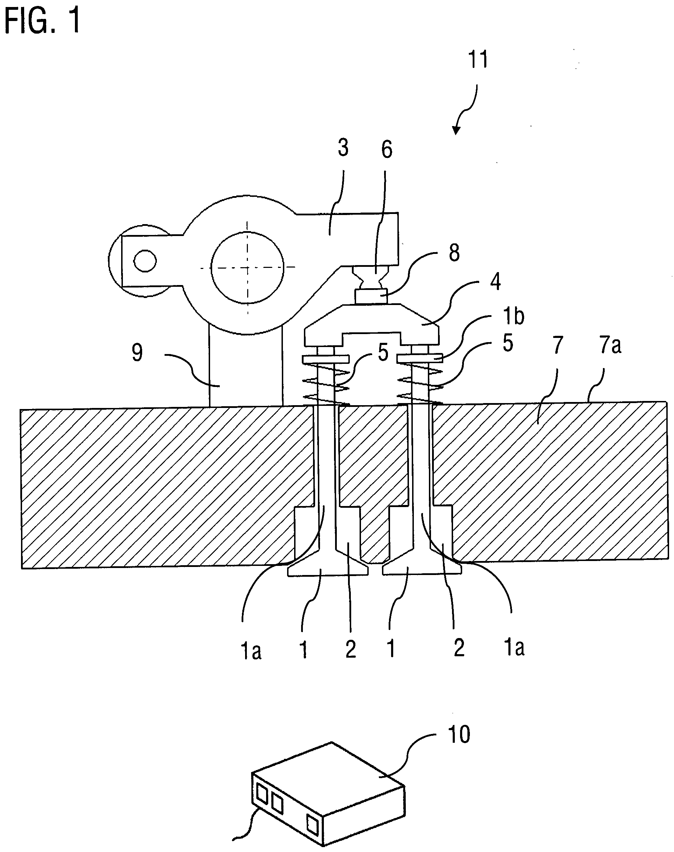

Figur 1 zeigt ferner einen Ventiltrieb 11 mit hydraulischem Ventilspielausgleich 6 einer Brennkraftmaschine gemäß einer Ausführungsform der Erfindung. Die Brennkraftmaschine umfasst einen nicht dargestellten 4-Takt-Hubkolbenverbrennungsmotor, der je Zylinder wenigstens ein Einlassventil (nicht dargestellt) und zwei Auslassventile 1 aufweist.

Die Ein- und Auslassventile 1 sind von einer (nicht dargestellten) Nockenwelle her steuerbar. Die Nockenwelle kann in Bezug auf den Kipphebel 3 untenliegend oder obenliegend sein. Figur 1 entspricht der Version mit obenliegender Nockenwelle (nicht gezeigt) im Bereich der Steuerung der beiden Auslassventile 1 eines Zylinders. Der Kipphebel 3 ist am Zylinderkopf 7 an einem Lagerbock 9 auf einer Lagerachse mit Gleitlager drehbar gelagert.

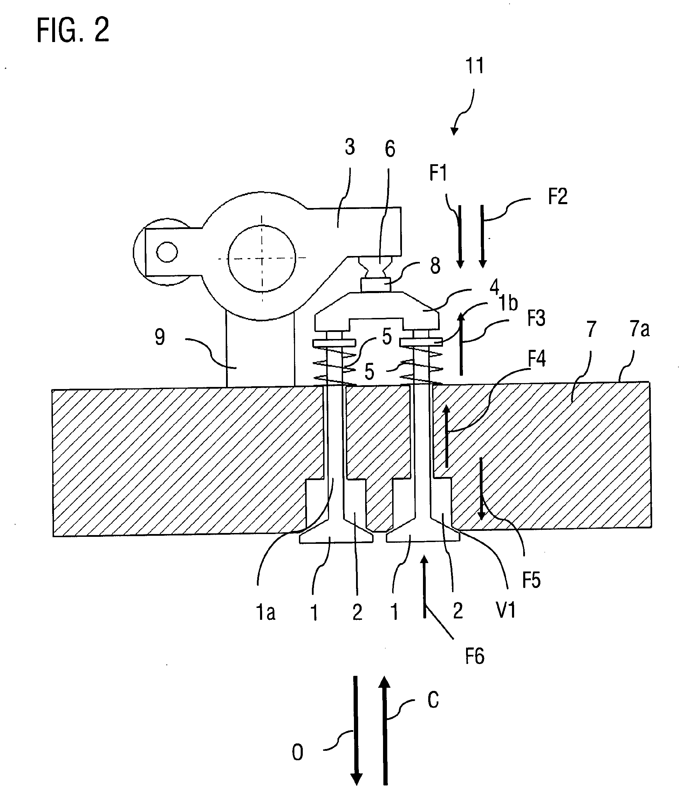

Der Kipphebel 3 wiederum wirkt auf eine Ventilbrücke 4 ein. Diese Ventilbrücke 4 dient zur Steuerung der beiden achsparallel zueinander angeordneten Auslassventile 1 eines Zylinders (nicht dargestellt) der Brennkraftmaschine (nicht dargestellt). Jedes der Auslassventile 1 ist mit seinem Schaft 1a im Zylinderkopf 7 (stark schematisiert dargestellt) axial beweglich gelagert und durch eine Schließfeder (Rückstellfeder) 5, die sich einenendes an einer Zylinderkopffläche 7a und andernendes an einem am Auslassventilschaft 1a befestigten Federteller 1b abstützt, mit einer bestimmten Vorspannkraft F3 (siehe auch Figur 2) in Schließrichtung C beaufschlagt. Jede der beiden Schließfedern 5 kann dabei entweder durch nur eine Spiralfeder oder zwei zueinander koaxiale Spiralfedern realisiert sein.

Zwischen dem Kipphebel 3 und der Ventilbrücke 4 ist ein hydraulisches Ventilspielausgleichselement 6 angeordnet, so dass der Kipphebel über das hydraulische Ventilspielausgleichselement 6 und eine kugelgelenkig angelenkte Stützkalotte 8 auf die Ventilbrücke 4 und damit auf die Auslassventile 1 einwirkt.

Das in an sich bekannter Weise ausgeführte hydraulische Ventilspielausgleichselement 6 weist einen an einen Druckraum grenzenden Kolben und eine in den Druckraum über ein durch eine Feder belastetes Rückschlagventil mündende Öldruckleitung auf (jeweils nicht dargestellt). Der Kolben, das Rückschlagventil und die Feder des hydraulischen Ventilspielausgleichselements 6 sind zwischen dem Ventilhebel 3 und der Ventilbrücke 4 angeordnet.

Das hydraulisches Ventilspielausgleichselement 6 dient dazu, insbesondere den Verschleiß (Ventil arbeitet sich in den Ventilsitz ein) über die Motorlebensdauer zu kompensieren, so dass in der Grundkreisphase des das Auslassventil 1 betätigenden Nockens ein sicheres Ventilschließen gewährleistet ist.

Die Auslasskanäle 2 der Zylinder münden in einen Abgastrakt der Brennkraftmaschine, in den möglichst motornah in an sich bekannter Weise eine Motorstaubremse zum Aufbau eines Abgasgegendrucks eingebaut ist. Diese kann durch eine Drosselklappe oder ein Tellerventil oder einen Schieber gebildet sein. In den meisten Fällen wird eine Drosselklappe verwendet. Die Motorstaubremse bildet einschließlich ihrer Steuer- und/oder Regelorgane einen Teil der Motorbremseinrichtung und dient während Motorbremsvorgängen zur zumindest partiellen Absperrung des Abgastraktes und zu einer hierdurch stromauf hervorgerufenen Aufstauung des Abgases. Weiterer Teil der Motorbremseinrichtung ist eine Dekompressionsbremse zur Motorbremsleistungssteigerung, die vorliegend durch das hydraulische Ventilspielausgleichselement 6 gebildet wird.

Die Funktion des hydraulischen Ventilspielausgleichselements 6 zur Motorbremsleistungssteigerung lässt sich wie folgt beschreiben:
Wird die Abgasdrosselklappe für einen Motorbremsbetrieb geschlossen, baut sich eine auf das Auslassventil 1 wirkende Gaskraft F5 des Abgasdruckes auf. Hierbei steigt der Abgasdruck im Auslasskanal vor der Verdichtung, insbesondere im Ansaugtakt vor dem unteren Totpunkt und im unteren Totpunkt, so stark an, dass das Auslassventil 1 durch die Druckwelle eines benachbarten Zylinders kurzzeitig aufgedrückt wird, wodurch ein Spalt zwischen Auslassventil 1 und dem Ventilsitzring gebildet wird bzw. eine Öffnung zum Auslasskanal 2 entsteht. Unterstützt wird das Aufdrücken des Ventils noch durch eine erste Kraftkomponente F1, die von dem hydraulischen Ventilspielausgleichselements 6 infolge des Öldruckes ausgeht, und durch eine zweite Kraftkomponente F2, die von dem hydraulischen Ventilspielausgleichselement 6 infolge der Rückstellfeder ausgeht.

Das Aufdrücken des Auslassventils 1 durch die zwei beschriebenen Effekte führt zu einer Entlastung des hydraulischen Ventilspielausgleichselements 6 und aufgrund des konstanten anliegenden Öldrucks und der Federkraft der Rückstellfeder des hydraulischen Ventilspielausgleichelementes folglich zum Nachstellen des hydraulischen Ventilspielausgleichselements 6. Der Kolben des hydraulischen Ventilspielausgleichelementes fährt somit aus. Das erneute Schließen des Ventils wird dadurch verhindert.

Es verbleibt ein kleiner Spalt der Größe V1 zwischen Auslassventil 1 und Ventilsitzring, nachfolgend kurz als Spalt bezeichnet, wodurch beim Kompressionstakt im Motor bereits ein Teil der verdichteten Luft aus dem Zylinder ausströmen kann. Der Druck auf den sich anschließend wieder abwärts bewegenden Kolben (Arbeitstakt) wird wesentlich verringert. Hierdurch verbessert sich die Motorbremsleistung. Durch die Drosselung des Abgases kann sowohl die Aufwärts- als auch die Abwärtsbewegung des Motorkolbens zum Bremsen genutzt werden.

Die Motordrehzahl, ab der es zum Auftreten eines Spaltes zwischen Auslassventil 1 und Ventilsitzring kommt, und die Größe des Spaltes, der sich im Motorbremsbetrieb zwischen Auslassventil 1 und seinem Ventilsitzring einstellt, ist abhängig von den folgenden Einflussgrößen:
(a) dem Abgasdruck, der die auf das Auslassventil 1 wirkenden Gaskraft F5 erzeugt.
(b) dem Gasdruck von der Brennraumseite, der die Gaskraft F6 erzeugt, die in Schließrichtung C wirkt,
(c) dem Öldruck, der am hydraulischen Ventilspielausgleich anliegt, der die Öldruckkraft F1 erzeugt;
(d) der Federkraft F2 der Rückstellfeder des hydraulischen Ventilspielausgleichs;
(e) der Ventilfederkraft F3 der Schließfedern 5;
(f) der Reibung im Ventiltrieb, die eine Reibungskraft F4 erzeugt.

Die auf das Auslassventil 1 wirkenden Kräfte F1 bis F6 sind in Figur 2 dargestellt. Die von der Motorstaubremse erzeugte Kraft F5 und die von dem Ventilspielausgleichselement erzeugten Kräfte F1 und F2 wirken beide in die gleiche Richtung O (Öffnungsrichtung), d. h., in eine Richtung, die hin zur Offenstellung des Auslassventils 1 wirkt. Die Federkraft F3 der Schließfeder 5 (Rückstellfeder) des Auslassventils und die Gaskraft F6, die durch den Brennraumdruck im Zylinder erzeugt wird, wirken dagegen in Schließrichtung C des Auslassventils.

Durch Anpassen dieser Einflussgrößen bzw. Kräfte lassen sich die maximale Spaltgröße und die Motordrehzahl, ab der es zum Auftreten jeweils eines Spaltes zwischen den Auslassventilen 1 und den zugeordneten Ventilsitzringen kommt, beeinflussen.. Die beiden Auslassventile 1 springen somit beide und werden durch das hydraulische Ventilspielausgleichselement 6, das über die Ventilbrücke 4 mit beiden Auslassventilen 1 in Verbindung steht, offen gehalten.

Unter einer erfindungsgemäßen Auslegung der Brennkraftmaschine zur Anpassung der Grenzdrehzahl, ab der es zum Auftreten eines Spaltes zwischen Auslassventil 1 und Ventilsitzring kommt, wird eine derartige zweckmäßige Anpassung dieser Einflussgrößen bzw. Kräfte verstanden. Je nach Auslegung kann somit die Grenzdrehzahl, ab der ein Ventilspringen auftritt, hin zu größeren oder kleineren Werten verschoben werden.

Eine Vergrößerung des Spaltes zwischen Auslassventil 1 und Ventilsitzring bzw. eine Verschiebung der Grenzdrehzahl hin zu niedrigeren Motordrehzahlen lässt sich durch zumindest eine der folgenden Maßnahmen erzielen: Abgasdruck erhöhen; Gasdruck von Brennraumseite verringern; Öldruck, der am hydraulischen Ventilspielausgleich anliegt, erhöhen; Federkraft der Rückstellfeder des hydraulischen Ventilspielausgleichs erhöhen; Ventilfederkraft verringern; oder die Reibung im Ventiltrieb verringern.

Wenn jedoch bei der Entwicklung der Brennkraftmaschine auf einem Prüfstand festgestellt wird, dass der Spalt in der Nockengrundkreisphase im Motorbremsbetrieb bereits unterhalb der Abregeldrehzahl auftritt, d. h. die Grenzdrehzahl zu niedrig ist, kann im Rahmen der Auslegung zumindest in analoger Weise eine der folgenden Maßnahmen vorgenommen werden:
Abgasdruck verringern, z. B. durch Verringerung der Schließstellung der Stauklappe; Gasdruck von Brennraumseite erhöhen; Öldruck, der am hydraulischen Ventilspielausgleich anliegt, verringern; Federkraft der Rückstellfeder des hydraulischen Ventilspielausgleichs verringern; Ventilfederkraft erhöhen; oder die Reibung im Ventiltrieb erhöhen. Mit zumindest einer dieser Maßnahmen kann eine Verschiebung des Auftretens des Spaltes hin zu größeren Motordrehzahlen bzw. eine Verringerung des Spaltes erzielt werden, so dass die Grenzdrehzahl auf einen geeigneten Wert oberhalb der Abregeldrehzahl eingestellt werden kann.

Auf diese Weise kann die Grenzdrehzahl, ab der im Motorbremsbetrieb in der Nockengrundkreisphase ein Ventilspringen des Auslassventils stattfindet, auf einen Wert eingestellt werden, der um einen gewünschten Abstandswert oberhalb der Abregeldrehzahl liegt.

Auf diese Weise kann ferner die über das Ventilspielausgleichselement 6 eingestellte Spaltgröße und damit die gewünschte Erhöhung der Motorbremsleistung eingestellt werden. Der Spalt nähert sich bei einer bestimmten Motordrehzahl immer einem Maximalwert an. Der Maximalwert des Spaltes stellt sich bei einem Kräftegleichgewicht der oben aufgeführten Einflussgrößen ein. Mit steigender Motordrehzahl erhöht sich dieser Maximalwert.

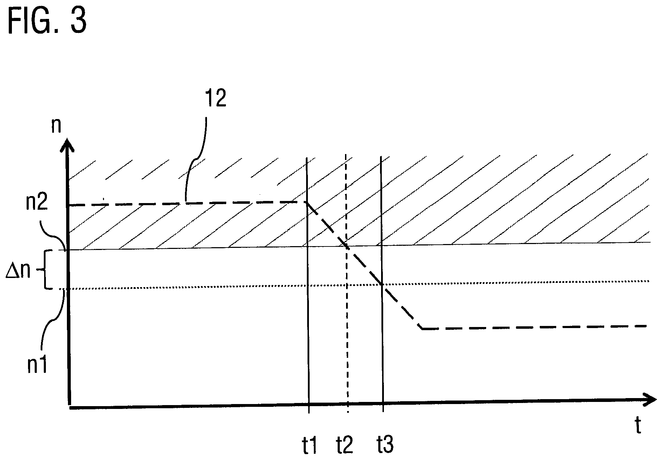

Anhand von Figur 3 wird die Funktionsweise der Motorbremseinrichtung erläutert und insbesondere ein Übergang von einem Motorbremsbetrieb zum anschließenden befeuerten Betrieb erläutert.

Die Kurve 12 bezeichnet einen beispielhaften Drehzahlverlauf über die Zeit. Vor dem Zeitpunkt t1 befindet sich das Fahrzeug in einem Motorbremsbetrieb, in dem die Stauklappe der Motorstaubremse geschlossen ist. Es baut sich in diesem Zustand eine auf das Auslassventil 1 wirkende Gaskraft F5 des Abgasdruckes auf. Es stellt sich somit eine erste Motorbremswirkung ein. Die Erhöhung der Motorbremswirkung durch die Dekompressionsbremse bzw. das Ventilspringen tritt jedoch erst ab der Grenzdrehzahl n2 ein. Wie vorstehend beschrieben wurde, sind die Komponenten der Brennkraftmaschine so ausgelegt, dass das Ventilspringen nur oberhalb der Grenzdrehzahl n2 stattfindet. Die Grenzdrehzahl ist so eingestellt, dass sie um den Abstandswert Δn oberhalb der Abregeldrehzahl n1 liegt. Das Ventilspringen bzw. die Wirkung der Dekompressionsbremse kann somit erst auftreten, wenn der befeuerte Betrieb bereits deaktiviert wurde.

Im Motorbremsbetrieb vor dem Zeitpunkt t1 stellt sich somit ein Spalt zwischen Auslassventil 1 und Ventilsitzring ein. Der Spalt wird durch das hydraulische Ventilspielausgleichselements 6 offengehalten. Der Druck auf den sich anschließend wieder abwärts bewegenden Kolben (Arbeitstakt) wird wesentlich verringert. Hierdurch verbessert sich die Motorbremsleistung.

Durch die Drosselung des Abgases kann sowohl die Aufwärts- als auch die Abwärtsbewegung des Motorkolbens zum Bremsen genutzt werden.

In diesem Zustand befinden sich die Kräfte Öldruckkraft F1, Rückstellfederkraft F2 des hydraulischen Ventilspielausgleichs, Gaskraft F5 des Abgasdruckes, Ventilfederkraft F3, Reibungskraft F4 und die vom Zylinderraumdruck erzeugte Gaskraft F6 im Gleichgewicht.

Eine besondere Herausforderung ist der Übergang vom Motorbremsbetrieb in den befeuerten Motorbetrieb. Es sollte sichergestellt sein, dass die Auslassventile 1 vor dem befeuerten Motorbetrieb wieder vollständig geschlossen sind, um einen erhöhten Ventil-/Sitzringverschleiß bzw. eine Überlastung des Ventiltriebes durch Offenstehen der Auslassventile 1 im befeuerten Betrieb zu verhindern.

Dies wird vorliegend durch eine zweckmäßig gewählte Größe des Abstandswertes Δn=n2-n1 erreicht, der dem Abstand der Grenzdrehzahl von der Abregeldrehzahl entspricht.

Direkt nach Beenden des Motorbremsbetriebes im Zeitpunkt t1, an dem die Abgasklappe der Motorstaubremse geöffnet wird, steht das Auslassventil 1 aufgrund des ausgelenkten Kolbens des hydraulischen Ventilspielausgleichselements 6 zunächst noch offen.

Durch das Öffnen der Abgasklappe im Zeitpunkt t1 wird die Gaskraft F5 des Abgasdruckes jedoch schlagartig stark reduziert und somit das beschriebene Kräftegleichgewicht gestört. Die Gaskraft F6 aus dem Zylinderraum und maßgeblich die Ventilfederkraft F3 führen nun dazu, dass sich der Kolben des hydraulischen Ventilspielausgleichselements 6 wieder in Richtung der Ausgangsposition zurückstellt und die Auslassventile 1 wieder komplett schließen können. Aufgrund der Auslegung der Dekompressionsbremse und der auf das Auslassventil wirkenden Kräfte ist das Auslassventil spätestens wieder geschlossen, wenn die Motordrehzahl 12 der Brennkraftmaschine wieder auf die Grenzdrehzahl n2 abgesunken ist (Zeitpunkt t2). Der befeuerte Betrieb ist zu diesem Zeitpunkt noch deaktiviert. Erst im Zeitpunkt t3, an dem die Motordrehzahl wieder die Abregeldrehzahl n1 erreicht, wird der befeuerte Betrieb gestartet.

Der Abstandswert Δn = n2 - n1 kann somit zweckmäßig so gewählt werden, dass dem Auslassventil 1 genügend Zeit bleibt, sich nach dem Ende des Motorbremsbetriebs wieder in die Schließstellung zu bewegen. Je größer der Abstandswert Δn gewählt wird, desto größer ist die Sicherheitszeitspanne zwischen Erreichen der Schließstellung und Start des befeuerten Betriebs. Je größer der Abstandswert Δn gewählt wird, desto länger ist die Zeitspanne eines Drehzahlrückgangs von der Grenzdrehzahl n2 auf die Abregeldrehzahl n1 im nicht befeuerten Betrieb nach Ende des Motorbremsbetriebs. Diese Zeitspanne sollte größer sein als eine Schließzeit des Auslassventils nach Ende des Motorbremsbetriebs. Ein geeigneter Abstandswert Δn kann beispielsweise experimentell durch Prüfstandsversuche ermittelt werden.

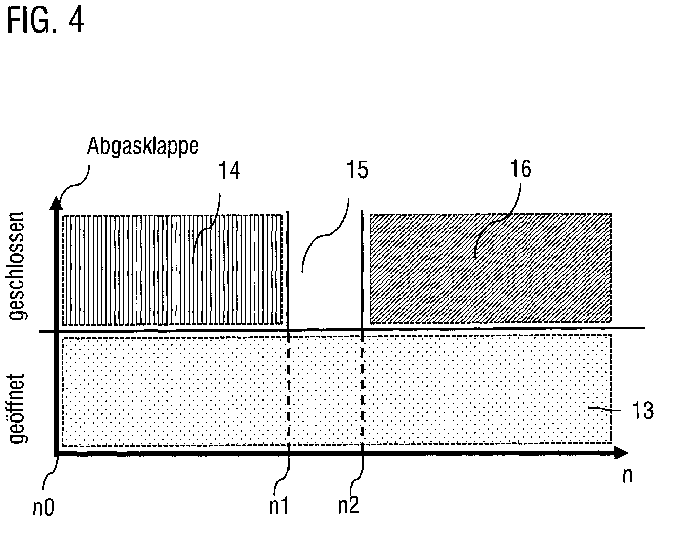

In Figur 4 sind die Bereiche illustriert, in denen ein Ventilspringen auftreten kann. Auf der Ordinatenachse sind die möglichen Stellungen der Abgasklappe aufgetragen, die vorliegend nur in eine geöffnete Stellung und eine geschlossene Stellung eingestellt werden kann. Im Motorbremsbetrieb ist die Abgasklappe in der geschlossenen Stellung, sonst in der geöffneten Stellung.

Die Abszissenachse ist eine Drehzahlachse. Mit n0 ist die untere Leerlaufdrehzahl, mit n1 wiederum die Abregeldrehzahl (auch als obere Leerlaufdrehzahl bezeichnet) und mit n2 die Grenzdrehzahl bezeichnet. Ein befeuerter Motorbetrieb ist somit aufgrund der Drehzahlbegrenzungseinrichtung 10 nur in den Drehzahlbereichen zwischen n0 und n1 möglich. Bei Drehzahlbereichen größer n1 ist nur ein nicht befeuerter Motorbetrieb möglich.

Im Bereich 13, der Betriebszustände des Fahrzeugs bezeichnet, bei denen die Motorstauklappe geöffnet ist, kann kein Ventilspringen auftreten, unabhängig von der Drehzahl, da der Abgasgegendruck und damit die Kraftkomponente F5 zu niedrig ist, um ein Ventilspringen zu erzeugen.

Im Bereich 14, der Betriebszustände des Fahrzeugs bezeichnet, bei denen die Motorstauklappe geschlossen ist, die Drehzahl jedoch unterhalb der Abregeldrehzahl n1 liegt, ist ebenfalls kein Ventilspringen möglich, da in diesem Bereich der erzeugbare Abgasgegendruck und damit die Kraftkomponente F5 zu niedrig ist, um ein Ventilspringen zu erzeugen.

Im Bereich 16, der Betriebszustände des Fahrzeugs bezeichnet, bei denen die Motorstauklappe geschlossen ist und die Drehzahl oberhalb der Grenzdrehzahl n2 liegt, tritt somit ein Ventilspringen auf, da in diesem Bereich der erzeugbare Abgasgegendruck und damit die Kraftkomponente F5 ausreichend hoch ist, um ein Ventilspringen zu erzeugen. In diesem Bereich kann jedoch kein befeuerter Betrieb stattfinden, da die Drehzahl über der Abregeldrehzahl n1 liegt.

Der Bereich 15, der Betriebszustände des Fahrzeugs bezeichnet, bei denen die Motorstauklappe geschlossen ist und die Drehzahl zwischen der Abregeldrehzahl n1 und der Grenzdrehzahl n2 liegt, stellt einen Übergangsbereich dar, der sicherstellt, dass sich ein im Motorbremsbetrieb in der Nockengrundkreisphase geöffnetes Auslassventil 1 wieder schließen kann, bevor der befeuerte Betrieb wieder einsetzt. Der Übergangsbereich 15 stellt somit sicher, dass kein Ventil im befeuerten Betrieb in der Nockengrundkreisphase offen steht.

### Bezugszeichenliste

- 1: Auslassventil
- 1a: Schaft
- 1b: Federteller
- 2: Auslasskanal
- 3: Kipphebel
- 4: Ventilbrücke
- 5: Schließfeder
- 6: Ventilspielausgleichselement
- 7: Zylinderkopf
- 7a: Zylinderkopffläche
- 8: Stützkalotte
- 9: Lagerbock_{[EC(2]}
- 10: Drehzahlbegrenzungseinrichtung
- 11: Ventiltrieb
- 12: Drehzahlverlauf
- 13, 14: Bereich ohne Ventilspringen
- 15: Übergangsbereich
- 16: Bereich mit Ventilspringen
- t1: Ende Motorbremsbetrieb
- t2: Erreichen Grenzdrehzahl
- t3: Beginn befeuerter Betrieb
- F1: Öldruckkraft des hydraulischen Ventilspielausgleichselements
- F2: Federkraft des hydraulischen Ventilspielausgleichselements
- F3: Federkraft der Schließfeder
- F4: Reibungskraft
- F5: Gaskraft durch Motorstaubremse
- F6: Gaskraft durch Brennraumdruck im Zylinder
- V1: Spaltgröße zwischen Auslassventil und Ventilsitzring

## Patentansprüche

1. Brennkraftmaschine mit zumindest einem über eine Nockenwelle und eine Übertragungseinrichtung (3, 4, 5) betätigbaren Auslassventil (1) pro Zylinder, wobei zwischen der Nockenwelle und dem Auslassventil (1) ein hydraulisches Ventilspielausgleichselement (6) in der Übertragungseinrichtung (3, 4, 5) angeordnet ist, sowie mit einer Motorbremseinrichtung, aufweisend eine Motorstaubremse zum Aufbau eines Abgasgegendrucks und eine Dekompressionsbremse, mit welcher zumindest in einer Motorbremsphase zumindest ein Auslassventil offengehalten werden kann,
wobei die Dekompressionsbremse durch das hydraulische Ventilspielausgleichselement (6) gebildet wird,
**dadurch gekennzeichnet,**
**dass** die Brennkraftmaschine eine Drehzahlbegrenzungseinrichtung (10) aufweist, die ausgeführt ist, eine Kraftstoffeinspritzung oberhalb einer vorbestimmten Abregeldrehzahl (n1) zu deaktivieren; und
**dass** die Übertragungseinrichtung (3, 4, 5), die Motorstaubremse und das hydraulische Ventilspielausgleichselement (6) so ausgelegt sind, dass eine Grenzdrehzahl (n2), ab der es im Motorbremsbetrieb in der Nockengrundkreisphase zum Auftreten eines Spaltes zwischen dem Auslassventil (1) und dem zugeordneten Ventilsitzring kommt, um einen Abstandswert (Δn) oberhalb der Abregeldrehzahl (n1) liegt.

2. Brennkraftmaschine nach Anspruch 1, **dadurch gekennzeichnet, dass** die Übertragungseinrichtung (3, 4, 5), die Motorstaubremse und das hydraulische Ventilspielausgleichselement (6) so ausgelegt sind, dass eine Summe der auf das Auslassventil in Schließrichtung (C) wirkenden Kräfte (F3, F4, F6) in einer Nockengrundkreisphase nur bei einer Drehzahl der Brennkraftmaschine unterhalb der vorbestimmten Grenzdrehzahl (n2) größer als eine Summe der in einer Öffnungsrichtung wirkenden Kräfte (F1, F2, F5) sind, so dass das Auslassventil in der Nockengrundkreisphase bei einer Drehzahl der Brennkraftmaschine unterhalb der Grenzdrehzahl (n2) in der Schließstellung gehalten wird und bei einer Drehzahl der Brennkraftmaschine größer gleich der Grenzdrehzahl (n2) in die Offenstellung bewegt wird.

3. Brennkraftmaschine nach Anspruch 2, **dadurch gekennzeichnet,**
(a) **dass** die in Schließrichtung (C) wirkenden Kräfte umfassen: eine Ventilfederkraft (F3) des Auslassventils (1) und eine brennraumseitig erzeugte Gasdruckraft (F6); und
(b) **dass** die in einer Öffnungsrichtung (O) wirkenden Kräfte umfassen: eine von der Motorstaubremse erzeugte Gasdruckkraft (F5) des Abgasdruckes, eine von dem Ventilspielausgleichselement erzeugte Öldruckkraft (F1) und eine Federkraft (F2) der Rückstellfeder des hydraulischen Ventilspielausgleichselements (6).

4. Brennkraftmaschine nach einem der Ansprüche 1 bis 3, **dadurch gekennzeichnet, dass** das hydraulische Ventilspielausgleichselement (6) einen an einen Druckraum grenzenden Kolben und eine in den Druckraum über ein durch eine Feder belastetes Rückschlagventil mündende Öldruckleitung umfasst.

5. Brennkraftmaschine nach Anspruch 4, **dadurch gekennzeichnet, dass** keine von dem Druckraum des Ventilspielausgleichselements (6) ausgehende, über ein steuerbares Entlastungsventil mit einer Drucksenke verbindbare Entlastungsleitung vorgesehen ist.

6. Brennkraftmaschine nach Anspruch 5, **dadurch gekennzeichnet, dass** kein Gegenhalter, der ausgebildet ist, eine Austrittsöffnung der Entlastungsleitung erst zu Beginn eines Auslasstaktes freizugeben, vorgesehen ist.

7. Brennkraftmaschine nach einem der vorhergehenden Ansprüche, **dadurch gekennzeichnet, dass** die Übertragungseinrichtung umfasst:
(a) eine Ventilbrücke (4); und
(b) einen als Kipphebel (3) oder Schlepphebel ausgebildeten Ventilhebel, der durch die Nockenwelle angetrieben wird und über die Ventilbrücke (4) auf die Auslassventile (1) wirkt.

8. Brennkraftmaschine nach einem der Ansprüche 4 bis 7, **dadurch gekennzeichnet, dass** der Kolben, das Rückschlagventil und die Feder des hydraulischen Ventilspielausgleichselements (6) zwischen dem Ventilhebel und der Ventilbrücke (4) angeordnet sind.

9. Kraftfahrzeug, insbesondere Nutzfahrzeug, mit einer Brennkraftmaschine nach einem der vorhergehenden Ansprüche.

## Claims

1. An internal combustion engine having at least one outlet valve (1) per cylinder, which outlet valve (1) can be actuated via a camshaft and a transmission device (3, 4, 5), a hydraulic valve clearance compensation element (6) being arranged in the transmission device (3, 4, 5) between the camshaft and the outlet valve (1), and having an engine braking device, having an engine backpressure brake for building up an exhaust gas backpressure and a compression release engine brake, by way of which at least one outlet valve can be held open at least in an engine braking phase,
the compression release engine brake being formed by the hydraulic valve clearance compensation element (6) **characterized**
**in that** the internal combustion engine has an engine speed limiting device (10) which is configured to deactivate an injection of fuel above a predetermined cut-off engine speed (n1); and
**in that** the transmission device (3, 4, 5), the engine backpressure brake and the hydraulic valve clearance compensation element (6) are designed in such a way that an engine speed limit (n2), above which a gap occurs between the outlet valve (1) and the associated valve seat ring in the cam base circle phase in the engine braking mode, lies above the cut-off engine speed (n1) by a distance value (Δn).

2. The internal combustion engine according to Claim 1, **characterized in that** the transmission device (3, 4, 5), the engine backpressure brake and the hydraulic valve clearance compensation element (6) are designed in such a way that a sum of the forces (F3, F4, F6) which act in the closing direction (C) on the outlet valve in a cam base circle phase is greater only in the case of an engine speed of the internal combustion engine below the predetermined engine speed limit (n2) than the sum of the forces (F1, F2, F5) which act in an opening direction, with the result that the outlet valve is held in the closed position in the cam base circle phase at an engine speed of the internal combustion engine below the engine speed limit (n2) and is moved into the open position at an engine speed of the internal combustion engine which is greater than or equal to the engine speed limit (n2).

3. The internal combustion engine according to Claim 2, **characterized**
(a) **in that** the forces which act in the closing direction (C) comprise: a valve spring force (F3) of the outlet valve (1) and a gas pressure force (F6) which is produced on the combustion chamber side; and
(b) **in that** the forces which act in an opening direction (O) comprise: a gas pressure force (F5) of the exhaust gas pressure which is produced by the engine backpressure brake, an oil pressure force (F1) which is produced by the valve clearance compensation element, and a spring force (F2) of the restoring spring of the hydraulic valve clearance compensation element (6).

4. The internal combustion engine according to one of Claims 1 to 3, **characterized in that** the hydraulic valve clearance compensation element (6) comprises a piston which adjoins a pressure space and an oil pressure line which opens into the pressure space via a check valve which is loaded by way of a spring.

5. The internal combustion engine according to Claim 4, **characterized in that** a relief line which emanates from the pressure space of the valve clearance compensation element (6) and can be connected to a pressure sink via a controllable relief valve is not provided.

6. The internal combustion engine according to Claim 5, **characterized in that** a counterholder which is configured to open an outlet opening of the relief line only at the beginning of an outlet stroke is not provided.

7. The internal combustion engine according to one of the preceding claims, **characterized in that** the transmission device comprises:
(a) a valve crosshead (4); and
(b) a valve lever which is configured as a rocker arm (3) or drag lever, is driven by the camshaft and acts on the outlet valves (1) via the valve crosshead (4).

8. The internal combustion engine according to one of Claims 4 to 7, **characterized in that** the piston, the check valve and the spring of the hydraulic valve clearance compensation element (6) are arranged between the valve lever and the valve crosshead (4).

9. A motor vehicle, in particular a commercial vehicle, having an internal combustion engine according to one of the preceding claims.

## Revendications

1. Moteur à combustion interne avec au moins une soupape d'échappement (1) par cylindre pouvant être actionnée par un arbre à cames et un système de transmission (3, 4, 5), dans lequel un élément hydraulique de compensation du jeu de soupape (6) est disposé dans le système de transmission (3, 4, 5) entre l'arbre à cames et la soupape d'échappement (1), ainsi qu'avec un système de frein moteur, présentant un frein moteur sur échappement pour l'établissement d'une contrepression de gaz d'échappement et un frein de type à décompression, avec lequel au moins une soupape d'échappement peut être maintenue ouverte dans une phase de freinage moteur,
dans lequel le frein de type à décompression est formé par l'élément hydraulique de compensation du jeu de soupape (6),
**caractérisé en ce que**
le moteur à combustion interne présente un dispositif de limitation du nombre de tours (10), qui est conçu de façon à désactiver une injection de carburant au-dessus d'un nombre de tours régulé prédéterminé (n1); et
le système de transmission (3, 4, 5), le frein moteur sur échappement et l'élément hydraulique de compensation du jeu de soupape (6) sont conçus de telle manière qu'un nombre de tours limite (n2), à partir duquel il se produit en fonctionnement de frein moteur dans la phase de cercle primitif de la came l'apparition d'une fente entre la soupape d'échappement (1) et le siège de soupape associé, se situe à une valeur de distance (Δn) au-dessus du nombre de tours régulé (n1).

2. Moteur à combustion interne selon la revendication 1, **caractérisé en ce que** le système de transmission (3, 4, 5), le frein moteur sur échappement et l'élément hydraulique de compensation du jeu de soupape (6) sont conçus de telle manière qu'une somme des forces (F3, F4, F6) agissant sur la soupape d'échappement dans la direction de fermeture (C) dans une phase de cercle primitif de la came uniquement pour un nombre de tours du moteur à combustion interne inférieur au nombre de tours limite prédéterminé (n2) soit supérieure à une somme des forces (F1, F2, F5) agissant dans une direction d'ouverture, de telle manière que la soupape d'échappement dans la phase de cercle primitif de la came pour un nombre de tours du moteur à combustion interne inférieur au nombre de tours limite (n2) soit maintenue dans la position fermée et pour un nombre de tours du moteur à combustion interne égal ou supérieur au nombre de tours limite (n2) soit déplacée dans la position ouverte.

3. Moteur à combustion interne selon la revendication 2, **caractérisé en ce que**
(a) les forces agissant dans la direction de fermeture (C) comprennent: une force de ressort de soupape (F3) de la soupape d'échappement (1) et une force de pression de gaz (F6) produite du côté de la chambre de combustion; et
(b) les forces agissant dans une direction d'ouverture (O) comprennent: une force de pression de gaz (F5) de la pression des gaz d'échappement produite par le frein moteur sur échappement, une force de pression d'huile (F1) produite par l'élément de compensation du jeu de soupape et une force de ressort (F2) du ressort de rappel de l'élément hydraulique de compensation du jeu de soupape (6).

4. Moteur à combustion interne selon l'une quelconque des revendications 1 à 3, **caractérisé en ce que** l'élément hydraulique de compensation du jeu de soupape (6) comprend un piston limitant une chambre de pression et une conduite sous pression d'huile débouchant dans la chambre de pression par un clapet anti-retour à ressort.

5. Moteur à combustion interne selon la revendication 4, **caractérisé en ce qu'**il n'est prévu aucune conduite de détente partant de la chambre de pression de l'élément de compensation du jeu de soupape (6) et pouvant être raccordée à un puits de pression par une soupape de détente réglable.

6. Moteur à combustion interne selon la revendication 5, **caractérisé en ce qu'**il n'est prévu aucun contre-appui, qui soit configuré pour libérer une ouverture de sortie de la conduite de détente uniquement au commencement d'un temps d'échappement.

7. Moteur à combustion interne selon l'une quelconque des revendications précédentes, **caractérisé en ce que** le système de transmission comprend:
(a) un pont de soupapes (4); et
(b) levier de soupape réalisé en forme de culbuteur (3) ou de levier entraîneur, qui est entraîné par l'arbre à cames et qui agit sur les soupapes d'échappement (1) au moyen du pont de soupapes (4).

8. Moteur à combustion interne selon l'une quelconque des revendications 4 à 7, **caractérisé en ce que** le piston, le clapet anti-retour et le ressort de l'élément hydraulique de compensation du jeu de soupape (6) sont disposés entre le levier de soupape et le pont de soupapes (4) .

9. Véhicule à moteur, en particulier véhicule utilitaire, doté d'un moteur à combustion interne selon l'une quelconque des revendications précédentes.
